# EUROPEAN PATENT APPLICATION

(11) **EP 3 407 214 A1**
(43) Date of publication of application: **28.11.2018**
(21) Application number: 18171931.1
(22) Date of filing: 11.05.2018
(51) Int. Cl.: G06F 17/30

(54) **METHODS, SYSTEMS, AND APPARATUS FOR SAFE MEMORY OBJECT ACCESS IN MEMORY MANAGEMENT MECHANISMS**

(30) Priority: 22.05.2017 US 201715601546
(71) Applicant: GE Aviation Systems LLC, Grand Rapids, MI 49512-1991 (US)
(72) Inventor: DECKER, Christian Reynolds, Grant Rapids, MI Michigan 49512 (US)
(74) Representative: Williams, Andrew Richard

(57) **Abstract**

Methods and apparatus for safe memory object access in memory management mechanisms are disclosed. An example apparatus includes a memory object container (104) to store data into a memory object (108a-108e) and tag the memory object; an object list manager (110) to store a reference to the memory object in storage (304); and a query results determiner (112) to, in response to receiving a query (508), transmit the query (508) to the object list manager (110), the object list manager (110) to identify the reference in the storage based on the query (508) and return a query response (518) to the query results determiner (112).

## Description

### FIELD OF THE DISCLOSURE

This disclosure relates generally to memory objects and, more particularly, to methods, system, and apparatus for safe memory object access in memory management mechanisms.

### BACKGROUND

Real-time computing systems include memory objects to store data. As the data changes, the data in the memory objects change. In some examples, data in a memory object may be deleted and/or a new memory object may be initiated for new data to keep the memory objects up-to-date. As the memory objects change, a user may run a query corresponding to some filter criteria. When the user runs the query, real-time computing systems search the memory objects to find data that matches the filter criteria.

### SUMMARY

Certain examples provide an apparatus for safe memory object access in memory management mechanisms. The example apparatus includes a memory object container to store data into a memory object and tag the memory object. The example apparatus further includes an object list manager to store a reference to the memory object in storage. The example apparatus further includes a query results determiner to, in response to receiving a query, transmit the query to the object list manager, the object list manager to identify the reference in the storage based on the query and return a query response to the query results determiner.

Certain examples provide a method for safe memory object access in memory management mechanisms. The example method includes tagging active memory objects with a first tag type and tag inactive memory objects with a second tag type. The example method further includes storing data into a memory object corresponding to the second tag type and tag the memory object with a tag corresponding to the first tag type. The example method further includes storing references to active memory objects in storage, the stored references including a reference to the tagged memory object. The example method further includes, in response to receiving a query, identifying the reference in the storage based on the query and return a query response to the query results determiner.

Certain examples provide a computer readable storage medium comprising instructions which, when executed, cause a machine to provide safe memory object access in memory management mechanisms. The example computer readable medium includes instructions to cause a machine to tag active memory objects with a first tag type and tag inactive memory objects with a second tag type. The example computer readable medium includes instructions to cause a machine to store data into a memory object corresponding to the second tag type and tag the memory object with a tag corresponding to the first tag type. The example computer readable medium includes instructions to cause a machine to store references to active memory objects in storage, the stored references including a reference to the tagged memory object. The example computer readable medium includes instructions to cause a machine to in response to receiving a query, identify the reference in the storage based on the query and return a query response to the query results determiner.

### BRIEF DESCRIPTION OF THE DRAWINGS

FIG. 1 is an illustration of an example memory management mechanism to gather data from an example memory object container based on a query.
FIG. 2 is an illustration of the example memory object controller of FIG. 1 to store and tag data in memory objects.
FIG. 3 is an illustration of an example object list manager of FIG. 1 to monitor the status of the memory objects.
FIG. 4 is an illustration of an example query result determiner of FIG. 1 to gather data from memory objects based on a query and the monitored status of the memory objects.
FIG. 5 is a diagram representative of an example interaction between the components of the example memory management mechanism of FIG. 1.
FIG. 6 is a flowchart representative of example machine readable instructions that may be executed to implement the example memory object controller of FIG. 2 to update data in the example memory objects of FIG. 1.
FIG. 7 is a flowchart representative of example machine readable instructions that may be executed to implement the example object list manager of FIG. 3 to maintain an object list.
FIG. 8 is a flowchart representative of example machine readable instructions that may be executed to implement the example object list manager of FIG. 3 to respond to query instructions from the example query result determiner of FIGS. 1 and/or 4.
FIG. 9 is a flowchart representative of example machine readable instructions that may be executed to implement the example object list manager of FIG. 3 to gather data from the example memory objects of FIG. 1 based on a query and the monitored status of the memory objects.
FIG. 10 is a block diagram of a processor platform structured to execute the example machine readable instructions of FIGS. 6-9 to implement the example memory object controller of FIG. 2, the example object list manager of FIG. 3, and/or the example query results determiner of FIG. 4.

The figures are not to scale. Wherever possible, the same reference numbers will be used throughout the drawing(s) and accompanying written description to refer to the same or like parts.

### DETAILED DESCRIPTION

Computing systems (e.g., real-time computing systems) include memory objects that store real-time data. In some examples, as the real-time data changes, the stored data in the memory objects changes and/or is removed. Additionally, new data can be implemented in new memory objects. For example, flight management systems include memory objects dedicated to data from sensors located on an aircraft. In such an example, the sensors detect other aircraft or objects in a particular altitude range. In such an example, the sensor determines (A) objects within the particular altitude range, (B) new objects that have entered the altitude range, (B) old objects that have left the altitude range, and/or data (e.g., relative location, speed, direction, etc.) related to current objects in the altitude range. When sensor data change, the dedicated memory objects must also change to adapt to remain up-to-date. Accordingly, memory objects are added, deleted, and/or modified in real-time.

The memory objects of computing systems can be queried by a user and/or processor for a sub-set of objects matching at least one filter criteria. Traditional techniques of querying memory objects to find a sub-set of objects that matches the filter criteria include copying the data in the memory objects and placing the data into a stack (e.g., a buffer). Because the data in the memory objects can be varying sizes, the memory needed for the stack will shrink and/or grow depending on the query. Initially, traditional techniques generate the size of the stack to make sure that the stack is appropriately sized to be able to handle the largest possible query. However, as other systems are adjusted, the size of the stack can no longer be appropriate to handle the possible queries associated with the adjusted system, thereby increasing the risk of running out of memory and/or a system crash. For example, a stack associated with memory objects dedicated to a sensor can be sized to 5 Megabytes (MB). However, if the sensor is updated to a stronger sensor that can gather more granular data, the 5 MB stack can now be inadequate to store memory object data corresponding to the stronger sensor. In such an example, a query resulting in data larger than 5 MB will cause the flight management system to crash. Examples disclosed herein alleviate the problems of such traditional techniques using an example memory management system that provides a query mechanism that uses static-sized references to memory objects that serve as a map to locate the sub-set of objects corresponding to a query.

Examples disclosed herein include a memory management system providing safe memory object access. Examples disclosed herein include a memory object container to store memory objects corresponding to real-time and/or substantially real-time data. Substantially real-time data being based on based on data processing, transmission and/or storage delay. Examples disclosed herein further include tagging the memory objects to later identify the memory objects and to determine whether a memory object is active or inactive. Active memory objects correspond to data that is relevant and/or currently up-to-date. Examples disclosed herein can tag memory objects using two or more tag types. For example, a first tag type may correspond to active memory objects and a second tag type may correspond to inactive memory objects. For example, if the data corresponds to an object received by a sensor, the memory object container may generate (e.g., activate) a memory object to include data related to the object. If the object is no longer being tracked by the sensor (e.g., because the object is out of the range of the sensor), the memory object container may determine that the data stored in the memory object corresponding to the sensed object is no longer relevant. Accordingly, examples disclosed herein change the tag type of the memory object from an active tag (e.g., with an identifier) to an inactive tag (e.g., an invalided tag).

Examples disclosed herein further include an object list manager to store references and/or snapshots of the active memory objects in the memory object container. A reference includes the tag (e.g., identifier, number, etc.) corresponding to an active memory object. The snapshot includes characteristics of the data stored in a memory object that may be used in a query. For example, when the memory objects include objects sensed by a sensor, the characteristics may include the type of object (e.g., ship, plane, mountain, etc.), the speed of the object, the size of the object, a duration the object has been tracked, a location of the object, etc. Accordingly, the system may be set up to allow a user to submit a query related to the sensed objects. For example, the query may correspond to object type. In such an example, the snapshot includes the object type corresponding to each memory object. The number and/or type of characteristics to be included in the snapshot may be based on manufacture preferences and/or system demands.

By storing the references and/or snapshots, as opposed to all the data in stored in the memory object, the object list manager requires substantially less memory than conventional stacks. Additionally, because the reference and/or snapshots do not substantially change in size, the size of the data in the memory objects become less relevant, thereby reducing the probability of overloading the storage during a query. The example memory object container disclosed herein updates the object list manager with any changes in memory object status (e.g., data change, new memory objects, deleted memory objects, changes in tags, etc.), allowing the object list manager to keep an up-to-date list of references and/or snapshots of active memory objects.

Examples disclosed herein further include a query result determiner to gather query data based on search criteria corresponding to a query of the memory objects. The query result determiner transmits the query to the object list manager to search the stored references and/or snapshots of the object list manager based on the search criteria. In some examples, the query result determiner may gather additional data from the identified memory objects based on the returned references (e.g., tags) that match the search query. For example, if the query corresponds to how many planes are currently being sensed by a sensor, the snapshot may only include the object types and return a number of planes currently being sensed by the sensor. In such an example, if the user wants more detailed information (e.g., speed, location, etc.) regarding the number of planes, the query result determines interfaces directly with the corresponding memory objects (e.g., based on the identifier returned in the query) to gather such data. Using examples disclosed herein, the risk of overloading a storage (e.g., such as a stack) based on large memory object data is substantially reduced and the size of the storage required to handle memory object queries is substantially reduced.

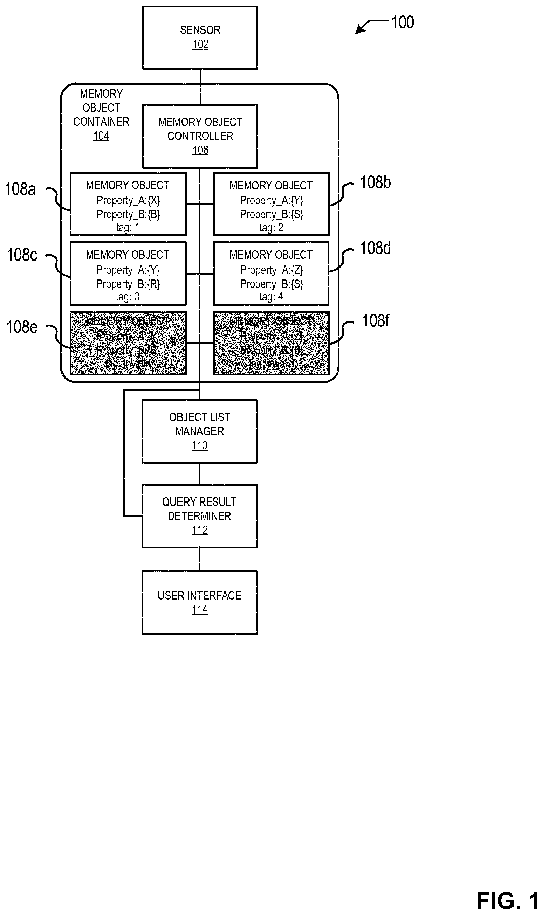

FIG. 1 illustrates a memory management mechanism 100 including a sensor 102, a memory object container 104, a memory object controller 106, memory objects 108a-108f, an object list manager 110, a query result determiner 112, and a user interface 114.

The sensor 102 of FIG. 1 detects events and/or changes in an environment and sends information (e.g., sensor data) based on the detection(s) to the memory object container 104. The sensor 102 can be any kind of sensor monitoring any kind of activity. The sensor 102 can process the environment to determine various data related to the sensed objects. For example, the sensor 102 may determine an object within a location. Additionally, the sensor 102 can determine the dimensions of the object, the size of the object, the distance to the object, the location of the object, the object type, the speed of the object, the material the object is made from, and/or any other data related to the object to generate the sensor data. In some examples, the sensor 102 transmits sensor data to the memory object container 104 in real-time (e.g., continuously) and/or substantially real-time. In some examples, the sensor 102 transmits sensor data periodically, occurring to a schedule, and/or aperiodically to the memory object container 104. Additionally or alternatively, the example sensor 102 may transmit sensor data to the example object list manager 110.

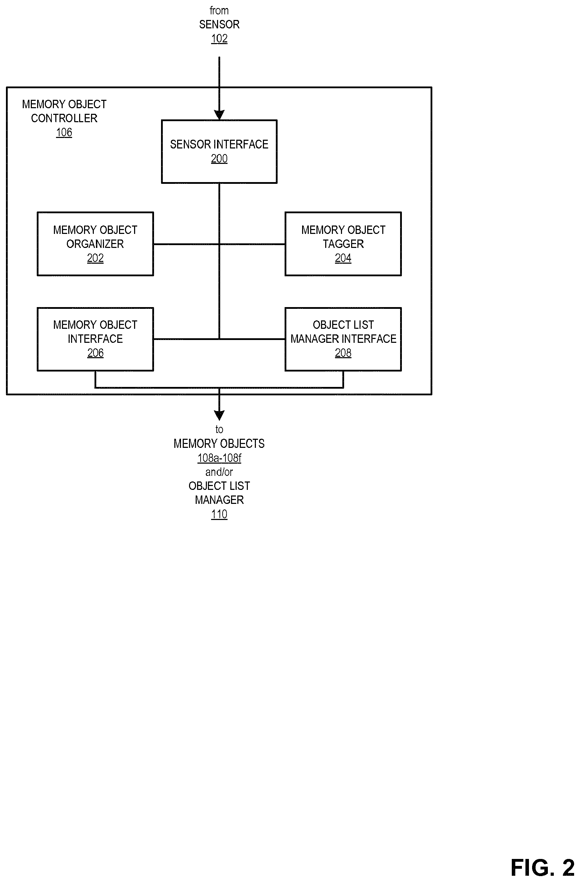

The memory object controller 106 of the memory object container 104 of FIG. 1 gathers sensor data from the sensor 102 and stores the sensor data into the memory objects 108a-108f. For example, the sensor 102 can monitor objects within an altitude range. In such an example, the memory object controller 106 processes the sensor data (e.g., identifying characteristics of five identified planes and two identified ships) to determine how to store the data related to the monitored objects. For example, the memory object controller 106 can store data related to a first object (e.g., a first plane) in a first memory object (e.g., memory object 108a), store data related to a second object (e.g., a first ship) in a second memory object (e.g., memory object 108b), etc. When the memory object controller 106 determines that the sensor data corresponds to a new object (e.g., plane, ship, mountain, etc.), the memory object controller 106 stores the corresponding sensor data in a new memory object and generates a tag (e.g., an identifier) for the memory object. Accordingly, each of the active memory objects 108a-108d includes, for example, an immutable tag to correspond to the object and/or the properties of the object. In some examples the immutable tag is a unique tag. The memory objects 108e-f correspond to unused and/or out-of-date (e.g., inactive) memory objects of the memory object container 104 when the data in the memory objects 108e-f are no longer relevant (e.g., corresponding to old data). The example inactive memory objects 108e-f include an "invalid" tag identifying that the memory objects 108e-f are not in use. Accordingly, the tag identifies active memory objects and/or when an object is inactive (e.g., when one of the sensed ships moves out of range of the sensor 102, for example). When the memory object controller 106 determines that an object is no longer of interest (e.g., the sensor 102 is no longer gathering data related to the object), the memory object controller 106 changes the tag to an invalid tag, thereby identifying that the memory object as no longer being monitored by the sensor 102. This can happen when, for example, an object leaves the altitude corresponding to the altitude being monitored by the sensor 102. Additionally, the memory object controller 106 transmits status data corresponding to updates and/or changes to the memory objects 108a-f. Although the illustrated memory object container 104 includes six memory objects 108a-f, the memory object container 104 can include any number of memory objects. The memory object controller 106 is further described in conjunction with FIG. 2.

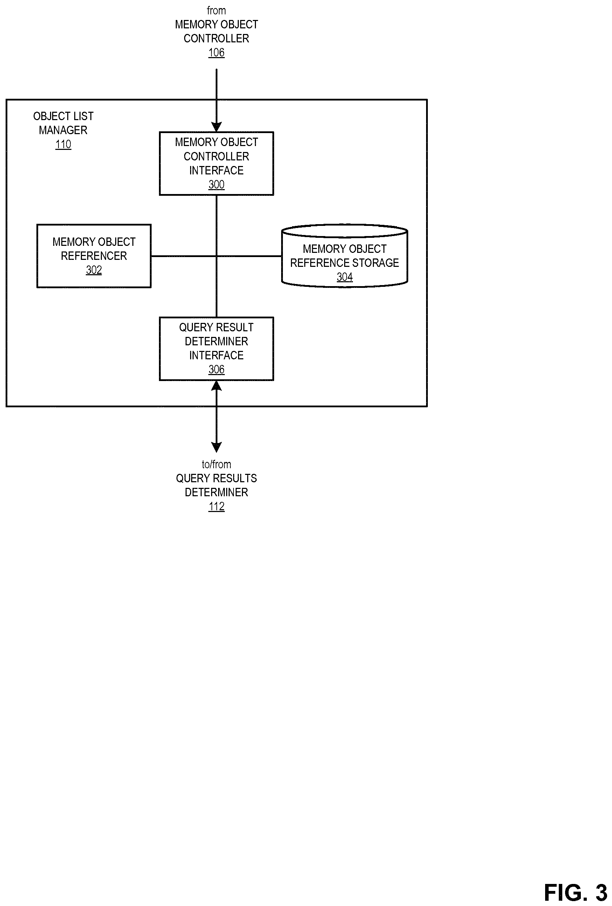

The object list manager 110 of FIG. 1 receives status data from the memory object controller 106 and/or from the example sensor 102. In some examples, the status data includes data related to the tags of the example memory objects 108a-108f, when a memory object has changed, when a memory object is changing, when a memory object has been deleted, and/or when a new memory object has been generated. The object list manager 110 generates, stores, and maintains references to the active memory objects (e.g., the memory objects 108a-108d) in statically sized memory (e.g., the object reference storage 304 of FIG. 3). The statically sized memory is sized according to the number of memory objects 108a-108f, as opposed to being sized according to a total of the sizes of the memory objects 108a-108f (e.g., since references to the memory objects 108a-108f are stored, rather than the data of the memory objects 108a-108f). The references to active memory objects include the tags generated by the memory object controller 106 and/or a snapshot of the properties of the corresponding memory objects. In some examples, the object list manager 110 generates a reference to the memory object 108a including the tag "1" and a snapshot (e.g., one or more predetermined characteristics that may be queried - object type, object distance, for example) of the memory object 108a listing the corresponding properties without actually copying all of the data from the memory object 108a. When the object list manager 110 receives additional status data from the memory object controller 106, the object list manager 110 adjusts the references (e.g., adding new references, deleting old references, adjusting data of current references, etc.). When the object list manager 110 receives a query from the query result determiner 112, the object list manager 110 scans the generated references (e.g., corresponding to the active memory objects) and returns a response including the tags of the memory objects that correspond to the query (e.g., that match the filter criteria). The object list manager 110 is further described in conjunction with FIG. 3.

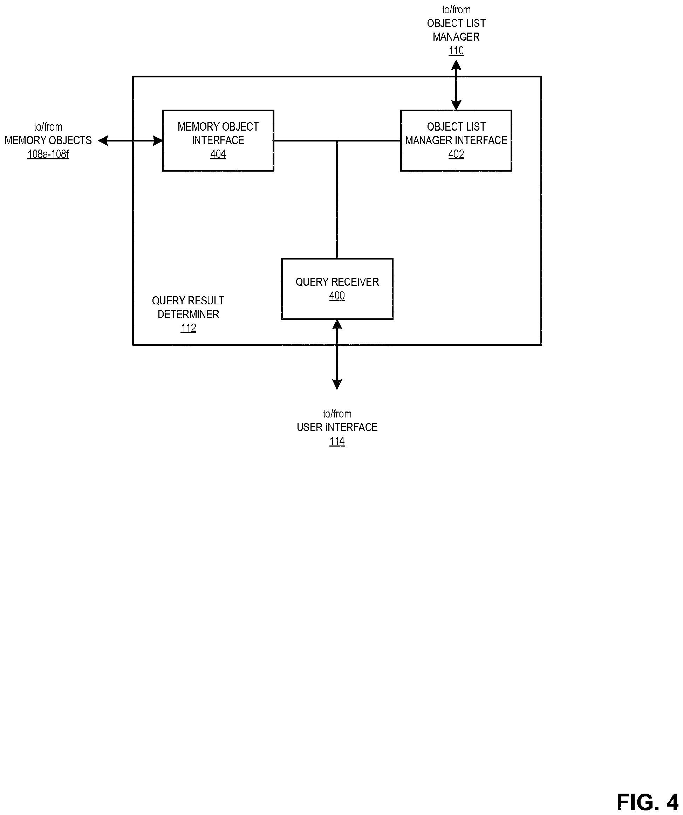

The query result determiner 112 of FIG. 1 receives a query from the user interface 114. The query includes a request for data corresponding to at least one filter criteria (e.g., corresponding to a characteristic included in the snapshot). For example, a user can request data related to objects corresponding to Property_A:{Y} (e.g., all flying objects, if the snapshot includes object types) via the user interface 114. In such an example, the query result determiner 112 receives the query from the user interface 114 and transmits the query (e.g., to identify all active flying objects (Property_A:{Y}) currently sensed by the sensor 102) to the object list manager 110. As described above, the object list manager 110 searches the stored references and returns tags corresponding to memory objects that match the query (e.g., references to memory objects corresponding to flying objects (Property_A:{Y})). For example, the object list manager 110 returns tags 2 and 3 (e.g., corresponding to memory object 108b and 108c). Although memory object 108e includes Property_A:{Y}, because the tag of memory object 108e is invalid, the data of the memory object 108e is no longer valid. Thus, the object list manager 110 does not store a reference in storage for memory object 108e and does not return a tag corresponding to the memory object 108e. In response to receiving the tag(s) corresponding to the query, the query result determiner 112 can interface with the memory objects 108b, 108c to gather the data from the memory objects 108b, 108c. For example, if data not included in the snapshot (e.g., object location, speed, etc.) corresponding to the sensed flying objects is to be transmitted to the user interface 114, the query result determiner 112 gathers such information directly from the memory objects 108b, 108c. Additionally, the query result determiner 112 can transmit the results of the query and/or the gathered data to the user interface 114. The query result determiner 112 is further described in conjunction with FIG. 4.

FIG. 2 is a block diagram of an example implementation for the memory object controller 106 of FIG. 1. The memory object controller 106 of the example of FIG. 2 is structured to manage the memory objects 108a-108f of the memory object container 104 based on received sensor data from the sensor 102 of FIG. 1. The memory object controller 106 of FIG. 2 includes a sensor interface 200, a memory object organizer 202, a memory object tagger 204, a memory object interface 206, and an object list manager interface 208.

The sensor interface 200 of FIG. 2 receives sensor data from the sensor 102 of FIG. 1. The sensor data includes data related to events and/or changes in an environment. The sensor data can be received in real-time (or substantially real-time based on data processing, transmission and/or storage delay), periodically, occurring to a schedule, and/or aperiodically. The sensor interface 200 transmits the received sensor data to the memory object organizer 202 for further processing.

The memory object organizer 202 of FIG. 2 gathers the received sensor data to determine whether memory object(s) 108a-108f of FIG. 1 are to be updated. For example, the memory object organizer 202 determines (A) if previously generated memory objects are to be deleted (e.g., because the received sensor data no longer includes data corresponding to the memory objects), (B) if the data in a memory object is to be updated (e.g., based on changes in the received sensor data), and/or (C) if a new memory object is to be allocated (e.g., based on data in the received sensor data). The memory object organizer 202 updates/deletes/adds data of the memory objects 108a-108f by transmitting instructions via the memory object interface 206. Additionally, the memory object organizer 202 transmits status data (e.g., updates and/or flags corresponding to the memory objects 108a-108f) to the object list manager 110 via the memory object interface 206. In some examples, the status data includes data related to the tags of the example memory objects 108a-108f, when a memory object has changed, when a memory object is changing, when a memory object has been deleted, and/or when a new memory object has been generated.

The memory object tagger 204 of FIG. 2 generates tags (e.g., unique numbers and/or identifiers, etc.) of a first tag type for the memory objects 108a-108f memory when the memory objects are active. As described above, a memory object is active when the sensor data includes data corresponding to the memory object. When the corresponding data is no longer included in the sensor data, the memory object tagger 204 replaces the tag with an "invalid" tag corresponding to a second tag type to identify that the memory object is no longer active and/or valid. The memory object tagger 204 generates and stores the tags in the memory objects via the memory object interface 206.

FIG. 3 is a block diagram of an example implementation for the object list manager 110 of FIG. 1. The object list manager 110 of the example of FIG. 3 is structured to store references to the active memory objects (e.g., memory objects 108a-d) of the memory object container 104 of FIG. 1. The object list manager 110 of FIG. 3 includes a memory object controller interface 300, a memory object referencer 302, a memory object reference storage 304, and a query result determiner interface 306.

The memory object controller interface 300 of FIG. 3 receives status data regarding the status of the memory objects 108a-108f. In some examples, the status updates include changes to data stored within the memory objects 108a-108f. In some examples, the status updates include deletions (e.g., withdrawals) of memory objects. In some examples, the status updates include additions of new memory objects. The memory object controller interface 300 transmits the status data to the memory object referencer 302.

The memory object referencer 302 of FIG. 3 generates and stores references to the memory objects 108a-108f of FIG. 1 that are active (e.g., that include a tag, etc.) in the memory object reference storage 304. The stored references include the tag and a snapshot of an active memory object. Accordingly, the memory object reference storage 304 is a statically sized storage that is sized to fit the tags and snapshots of the memory objects 108a-f. Because the size of a tag and a snapshot of a memory object is significantly smaller than the data stored in the memory object, the memory object reference storage 304 is substantially smaller than traditional stacks for real-time computing systems. Additionally, because the reference only includes a tag and a snapshot, the memory object can change sizes while the space of the memory object reference storage 304 remains static, thereby allowing for durability and versatility of the memory management mechanism 100 of FIG. 1.

When the memory object referencer 302 of FIG. 3 determines that a memory object has been deleted (e.g., marked with an "invalid" tag), the memory object referencer 302 removes (e.g., deletes) the corresponding reference from the memory object reference storage 304. When the memory object referencer 302 determines that a memory object has been added (e.g., marked with a new tag), the memory object referencer 302 adds a corresponding reference to the memory object reference storage 304. In some examples, when the memory object referencer 302 determines that a memory object is flagged, identifying a change to the memory object, the memory object referencer 302 flags the reference. If a flagged reference corresponds to an ongoing query, the memory object referencer 302 can transmit a flag or warning to the query results determiner 112 via the query result determiner interface 306 identifying the flagged memory object. When the memory object referencer 302 receives a query from the query results determiner 112, the memory object reference searches the references stored in the memory object reference storage 304 to identify memory object(s) that match the filter criteria of the query. In response to identifying memory object(s) that match the filter criteria of the query, the memory object referencer 302 returns tag(s) corresponding to the identified memory object(s) to the query results determiner 112.

FIG. 4 is a block diagram of an example implementation for query result determiner 112 of FIG. 1. The query result determiner 112 of the example of FIG. 3 is structured to receive queries from the user interface 114 of FIG. 1 and gather data from the memory objects 108a-108f that match the filter criteria of the query. The query result determiner 112 of FIG. 4 includes a query receiver 400, an object list manager interface 402, and a memory object interface 404.

The query receiver 400 of FIG. 4 receives instructions (e.g., a query including filter criteria) from the user interface 114 of FIG. 1. In response to receiving the query from the user interface 114, the managed object list manager interface 402 transmits the query to the object list manager 110 of FIGS. 1 and/or 3. As described above in conjunction with FIGS. 1 and 3, the object list manager 110 returns tag(s) to active memory objects corresponding to a match of the filter criteria of the query. In response to receiving the tag(s) from the object list manager 110, the memory object interface 404 can gather additional data directly from the memory object(s) corresponding to the tag(s). The query receiver 400 transmits a response to the user interface 114 including the tag(s) and/or any other data gathered from the memory objects corresponding to the query results.

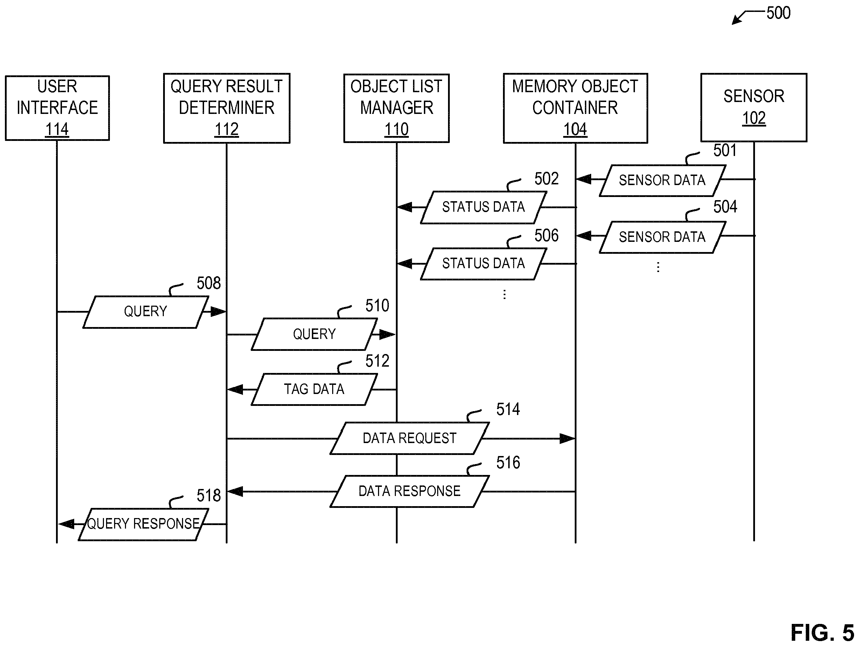

FIG. 5 is a diagram representative of an example interaction 500 between the components of the memory management mechanism 100 of FIG. 1 to provide safe memory object access in memory management mechanisms. The example diagram includes the sensor 102, the memory object container 104, the object list manager 110, the query result determiner 112, and the user interface 114 of FIG. 1. The diagram of FIG. 5 further includes sensor data 501, 504, status data 502, 506, queries 508, 510, tag data 512, a data request 514, a data response 516, and a query response 518.

Initially, the sensor 102 transmits the sensor data 501 to the memory object container 104. The memory object container 104 processes the sensor data 501 to generate and tag memory objects corresponding to the sensor data 501. For example, if the sensor data includes a sensed ship at a location moving at some speed, the memory object container stores the data relating to the characteristics of the ship, the location, the speed etc. in a memory object. Once a memory object has been created, the memory object container 104 transmits the status data 502 to the object list manager 110. For example, if the snapshot is designed to include only object type data, the memory object container 104 transmits the status data 502 to include the tag of the newly generated memory object with a snapshot identifying that the newly generated memory object is a ship. Additionally or alternatively, the example sensor 102 may transmit the sensor data 501 directly to the example object list manager 110, and the example object list manager 110 may generate the reference based on the sensor data 501. The object list manager 110 generates and stores references and snapshots to the newly created memory objects based on the status data 502. As shown in the illustrated diagram of FIG. 5, the sensor 102 continues to transmit sensor data 504 to the memory object container 104. Accordingly, the memory object container 104 continues to process the new sensor data (e.g., sensor data 504) and determine whether the old memory objects are to be removed, data of current memory objects are to be adjusted, or new memory objects are to be created based on the new sensor data. This process can continue as new sensor data is received.

When a user initiates a query, the user interface 114 transmits the query 508 to the query result determiner 112. The query may correspond to one or more characteristics included in the snapshot stored at the object list manager 110. As described above, the query 508 includes at least one filter criteria (e.g., characteristic(s) corresponding to a snapshot) that is to be identified in the active memory objects 108a-d of the memory object container 104. In response to receiving the query 508, the query result determiner 112 transmits the query 510 to the object list manager 110. As described above, the object list manager 110 stores references (e.g., tags and snapshots) to active memory objects of the memory object container 104. Accordingly, the object list manager 110 searches the stored references to identify active memory objects that match the filter criteria (e.g., based on the snapshots of the references) of the query 508, 510. Once the object list manager 110 determines the corresponding memory objects, the object list manager 110 returns the tag data 512, identifying the tags and/or snapshot data of the corresponding memory objects. In some examples, the tag data includes the tag of a memory object that corresponds to the example query 510.

In some examples, the query result determiner 112 transmits the tags and/or the identified memory object data back to the user interface 114. In some examples, the query result determiner 112 gathers additional data directly from the memory objects of the memory object container 104 that is not included in the tag data 512 (e.g., other characteristics not included in the snapshot). In such examples, the query result determiner 112 transmits the data request 514 to the memory object container 104 to interface directly with the memory objects 108a-d corresponding to the tag data 512 to collect additional data stored in the corresponding memory objects. For example, the example query 510 may be based on an amount of objects within a certain location range, where the snapshots include location data of objects. Accordingly, the example query result determiner 112 may also want speeds of the objects resulting from the query. In such an example, because speed may not be included in the snapshot, the query result determiner 112 uses the tag data 512 to gather speed data from the memory objects corresponding to the query result.

In response to receiving the data request 514, the memory object container 104 transmits a data response 516 including the requested data from the memory objects 108a-d corresponding to the tag data 512. The query result determiner 112 transmits the query response 518 to the user interface 114. The query response can include the tags, the snapshots, and/or any other data corresponding to the active memory objects that match the filter criteria of the query 508, 510.

While example manners of implementing the memory object controller 106, the object list manager 110, and/or the query result determiner 112 of FIG. 1 are illustrated in conjunction with FIGS. 2, 3 and 4, elements, processes and/or devices illustrated in conjunction with FIGS. 2, 3, and/or 4 may be combined, divided, re-arranged, omitted, eliminated and/or implemented in any other way. Further, the sensor interface 200, the memory object organizer 202, the memory object tagger 204, the memory object interface 206, the object list manager interface 208, the memory object controller interface 300, the memory object referencer 302, the memory object reference storage 304, the query result determiner interface 306, the query receiver 400, the object list manager interference 402, the memory object interface 404, and/or, more generally, the memory object controller 106, the object list manager 110, and/or the query result determiner 112 of FIGS. 2, 3, and/or 4 may be implemented by hardware, machine readable instructions, software, firmware and/or any combination of hardware, machine readable instructions, software and/or firmware. Thus, for example, any of the sensor interface 200, the memory object organizer 202, the memory object tagger 204, the memory object interface 206, the object list manager interface 208, the memory object controller interface 300, the memory object referencer 302, the memory object reference storage 304, the query result determiner interface 306, the query receiver 400, the object list manager interference 402, the memory object interface 404, and/or, more generally, the memory object controller 106, the object list manager 110, and/or the query result determiner 112 of FIGS. 2, 3, and/or 4 can be implemented by analog and/or digital circuit(s), logic circuit(s), programmable processor(s), application specific integrated circuit(s) (ASIC(s)), programmable logic device(s) (PLD(s)) and/or field programmable logic device(s) (FPLD(s)). When reading any of the apparatus or system claims of this patent to cover a purely software and/or firmware implementation, at least one of the sensor interface 200, the memory object organizer 202, the memory object tagger 204, the memory object interface 206, the object list manager interface 208, the memory object controller interface 300, the memory object referencer 302, the memory object reference storage 304, the query result determiner interface 306, the query receiver 400, the object list manager interference 402, the memory object interface 404, and/or, more generally, the memory object controller 106, the object list manager 110, and/or the query result determiner 112 of FIGS. 2, 3, and/or 4 is/are hereby expressly defined to include a tangible computer readable storage device or storage disk such as a memory, a digital versatile disk (DVD), a compact disk (CD), a Blu-ray disk, etc. storing the software and/or firmware. Further still, the memory object controller 106, the object list manager 110, and/or the query result determiner 112 of FIGS. 2, 3, and/or 4 include elements, processes and/or devices in addition to, or instead of, those illustrated in conjunction with FIGS. 2, 3, and 4, and/or may include more than one of any or all of the illustrated elements, processes and devices.

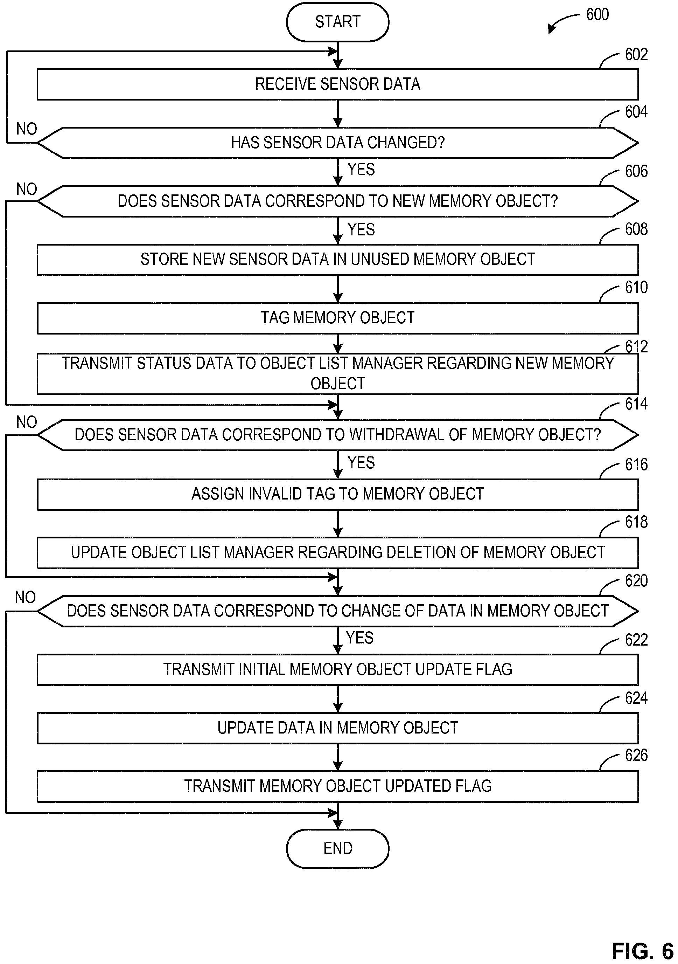

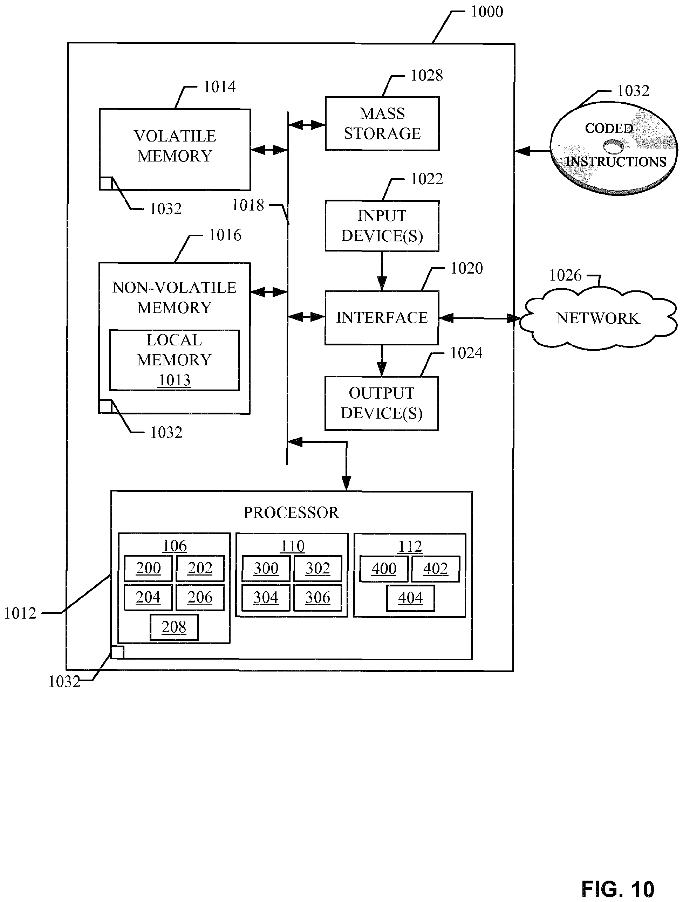

Flowcharts representative of example machine readable instructions for implementing the memory object controller 106, the object list manager 110, and/or the query result determiner 112 of FIGS. 2, 3, and/or 4 are shown in conjunction with FIGS. 6-9. In the examples, the machine readable instructions include a program for execution by one or more processors such as the processor 1012 shown in the example processor platform 1000 discussed below in connection with FIG. 10. The program may be embodied in machine readable instructions stored on a tangible computer readable storage medium such as a CD-ROM, a floppy disk, a hard drive, a digital versatile disk (DVD), a Blu-ray disk, or a memory associated with the processor 1012, but the entire program and/or parts thereof could alternatively be executed by a device other than the processor 1012 and/or embodied in firmware or dedicated hardware. Further, although the example program is described with reference to the flowcharts illustrated in conjunction with FIGS. 6-9, many other methods of implementing the memory object controller 106, the object list manager 110, and/or the query result determiner 112 of FIGS. 2, 3, and 4 may alternatively be used. For example, the order of execution of the blocks may be changed, and/or some of the blocks described may be changed, eliminated, or combined. Although the flowcharts of FIGS. 6-9 depict example operations in an illustrated order, these operations are not exhaustive and are not limited to the illustrated order. In addition, various changes and modifications may be made by one skilled in the art within the spirit and scope of the disclosure. For example, blocks illustrated in the flowchart may be performed in an alternative order or may be performed in parallel.

As mentioned above, the example processes of FIGS. 6-9 may be implemented using coded instructions (e.g., computer and/or machine readable instructions) stored on a tangible computer readable storage medium such as a hard disk drive, a flash memory, a read-only memory (ROM), a compact disk (CD), a digital versatile disk (DVD), a cache, a random-access memory (RAM) and/or any other storage device or storage disk in which information is stored for any duration (e.g., for extended time periods, permanently, for brief instances, for temporarily buffering, and/or for caching of the information). As used herein, the term tangible computer readable storage medium is expressly defined to include any type of computer readable storage device and/or storage disk and to exclude propagating signals and to exclude transmission media. As used herein, "tangible computer readable storage medium" and "tangible machine readable storage medium" are used interchangeably. Additionally or alternatively, the example processes of FIGS. 6-9 may be implemented using coded instructions (e.g., computer and/or machine readable instructions) stored on a non-transitory computer and/or machine readable medium such as a hard disk drive, a flash memory, a read-only memory, a compact disk, a digital versatile disk, a cache, a random-access memory and/or any other storage device or storage disk in which information is stored for any duration (e.g., for extended time periods, permanently, for brief instances, for temporarily buffering, and/or for caching of the information). As used herein, the term non-transitory computer readable medium is expressly defined to include any type of computer readable storage device and/or storage disk and to exclude propagating signals and to exclude transmission media. As used herein, when the phrase "at least" is used as the transition term in a preamble of a claim, it is open-ended in the same manner as the term "comprising" is open ended. In addition, the term "including" is open-ended in the same manner as the term "comprising" is open-ended.

FIG. 6 is a flowchart 600 representative of example machine readable instructions that can be executed by the memory object controller 106 of FIG. 2 to manage the memory objects 108a-108f of FIG. 1. Although the instructions of FIG. 6 are described in conjunction with the memory object controller 106 of FIG. 2 and the memory object container 104 of FIG. 1, the example instructions can be utilized by any type of memory object controller and any type of memory object container.

At block 602, the sensor interface 200 receives sensor data from the sensor 102. As described above, the sensor data includes data related to events and/or changes in an environment. At block 604, the memory object organizer 202 determines if the sensor data has changed. If the sensor data is the same as previously received sensor data, then the memory objects 108a-108f are not to be updated. Accordingly, the such sensor data can be discarded. If the memory object organizer 202 determines that the sensor data has not changed, (block 604: NO), the process returns to block 602 as the memory object organizer 202 waits for additional sensor data. If the memory object organizer 202 determines that the sensor data has changed, (block 604: YES), the memory object organizer 202 determines if the sensor data corresponds to a new memory object (block 606). The sensor data corresponds to a new memory object when the sensor data corresponds to a new object or item that has been sensed by the sensor 102.

If the memory object organizer 202 determines that the sensor data does not correspond to a new memory object (block 606: NO), the process continues to block 614. If the memory object organizer 202 determines that the sensor data corresponds to a new memory object (block 606: YES), the memory object organizer 202 instructs the memory object interface 206 to store the new sensor data in an unused memory object (e.g., memory objects 108e, 108f). At block 610, the memory object tagger 204 tags the memory object corresponding to the new sensor data with a tag (e.g., identifier). At block 612, the memory object organizer 202 instructs the object list manager interface 208 to transmit status data to the object list manager 110 regarding the new memory object. The status data includes the generated tag and a snapshot of the memory object.

At block 614, the memory object organizer 202 determines if the sensor data corresponds to a withdrawal (e.g., deletion) of a currently active memory object. As described above, if an object or event is removed from an environment monitored by the sensor 102, the sensor data will no longer include data related to the removed object or event. Accordingly, the memory objects 108a-108f are to be updated to reflect the removal of the object or event in the sensor data. If the memory object organizer 202 determines that the sensor data does not correspond to a withdrawal of a currently active memory object (block 614: NO), the process continues to block 620. If the memory object organizer 202 determines that the sensor data does correspond to a withdrawal of a currently active memory object (block 614: YES), the memory object tagger 204 assigns an "invalid" tag to the corresponding memory object (e.g., changing the tag to the "invalid" tag) (block 616). At block 618, the memory object organizer 202 updates the object list manager 110 (e.g., via the object list manager interface 208) regarding the deletion of the memory object by transmitting status data.

At block 620, the memory object organizer 202 determines if the sensor data corresponds to a change of data in one or more of the memory objects 108a-f. For example, if the sensor data corresponds to objects in a particular area. Objects changing directions, speeds, location, etc., can correspond to changes in data to be stored in a corresponding memory object. If the memory object organizer 202 determines that the sensor data corresponds to a change of data in a memory object (block 620: YES), the memory object organizer 202 instructs the object list manager interface 208 to transmit an initial memory object update flag corresponding to the memory object that is getting updated (block 622). The initial memory object update flag warns the object list manager 110 that the data is temporarily in flux. At block 624, the memory object organizer 202 instructs the memory object interface 206 to update the data the one or more memory objects corresponding to a change in data. At block 626, the memory object organizer transmits, via the object list manager interface 208, a memory object updated flag to the object list manager 110 to verify that the data is updated and the corresponding memory object(s) are no longer in flux.

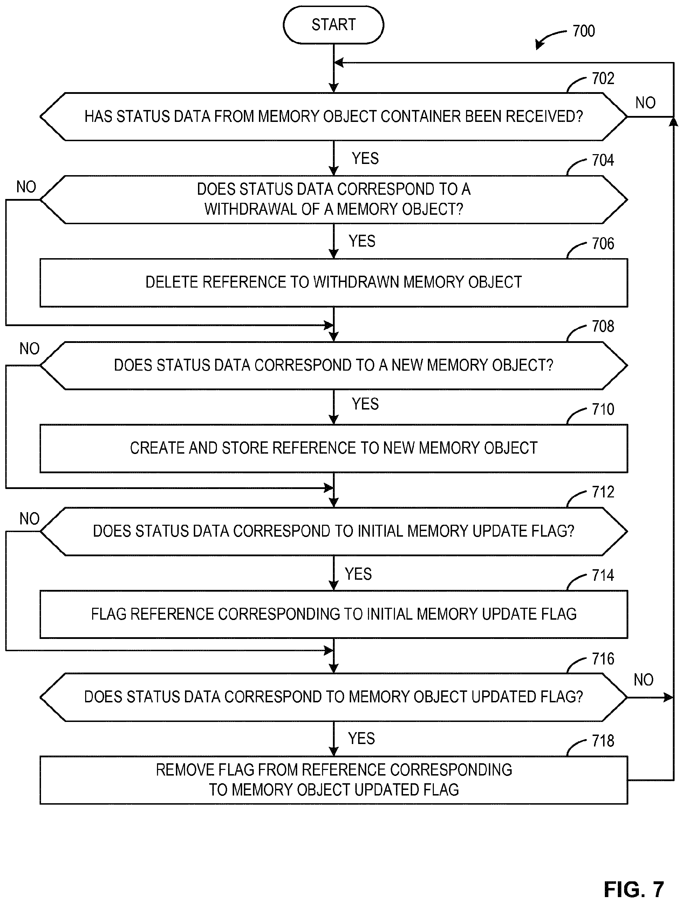

FIG. 7 is a flowchart 700 representative of example machine readable instructions that can be executed by the object list manager 110 of FIG. 3 to generate and store references to active memory objects of the memory object container 104 of FIG. 1. Although the instructions of FIG. 7 are described in conjunction with the object list manager 110 of FIG. 3, the example instructions can be utilized by any type of object list manager.

At block 702, the memory object controller interface 300 determines if status data from the memory object container 106 has been received. As described above, the status data can include data related to a new memory object, deletion of an old object, or flags identifying changes to data in current memory objects. If the memory object controller interface 300 determines that status data from the memory object container 106 has not been received (block 702: NO), the memory object controller interface 300 continues to wait until status data has been received. If the memory object controller interface 300 determines that status data from the memory object container 106 has been received (block 702: YES), the memory object referencer 302 determines if the status data corresponds to a withdrawal (e.g., deletion) of a memory object (e.g., one of the memory objects 108a-f) (block 704).

If the memory object referencer 302 determines that the status data corresponds to a withdrawal of a memory object (block 704: YES), the memory object referencer 302 deletes the reference to the memory object in the memory object reference storage 304 (block 706). If the memory object referencer 302 determines that the status data does not correspond to a withdrawal of a memory object (block 704: NO), the process continues to block 708.

At block 708, the memory object referencer 302 determines if the status data corresponds to a new memory object. If the memory object referencer 302 determines that the status data corresponds to a new memory object (block 708: Yes), the memory object referencer 302 creates and stores a reference to the new memory object in the memory object reference storage 304 (block 710). As described above in conjunction with FIG. 3, the reference includes the tag for the memory object generated by the memory object controller 106 and a snapshot of the data stored in the new memory object. If the memory object referencer 302 determines that the status data does not correspond to a new memory object (block 708: NO), the process continues to block 712.

At block 712, the memory object referencer 302 determines if the status data corresponds to an initial memory update flag. The initial memory update flag warns the object list manager 110 that the data of a memory object is currently changing. If the memory object referencer 302 determines that the status data corresponds to an initial memory update flag (block 712: YES), the memory object referencer 302 flags the reference corresponding to the initial memory update flag (block 714). When the query results determiner 112 transmits a query corresponding to the flagged reference, the flag identifies that the data in the flagged memory object is currently changing. If the memory object referencer 302 determines that the status data does not correspond to an initial memory update flag (block 712: NO), the process continues to block 716.

At block 716, the memory object referencer 302 determines if the status data corresponds to a memory object updated flag. The memory object updated flag lets the object list manager 110 know that the memory object has been updated (e.g., is no longer in flux). If the memory object referencer 302 determines that the status data corresponds to a memory object updated flag (block 716: YES), the memory object referencer 302 removes the flag from the reference corresponding to the memory object updated flag (block 718). If the memory object referencer 302 determines that the status data does not correspond to a memory object updated flag (block 716: NO), the process returns to block 702.

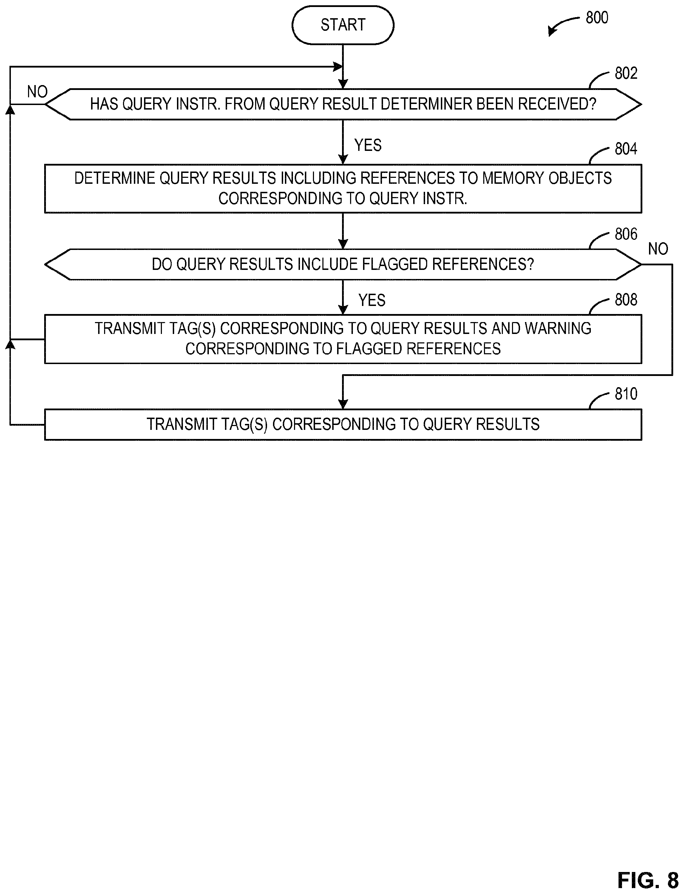

FIG. 8 is a flowchart 800 representative of example machine readable instructions that can be executed by the object list manager 110 of FIG. 3 to search stored references to response to a query from the query result determiner 112 of FIG. 1. Although the instructions of FIG. 8 are described in conjunction with the object list manager 110 of FIG. 3, the example instructions can be utilized by any type of object list manager.

At block 802, the query result determiner interface 306 determines if query instructions from the query results determiner 112 have been received. In some examples, the query instructions include a query of one or more properties (e.g., filter criteria) that can be stored in one or more of the memory objects 108a-f. If the query result determiner interface 306 determines that query instructions from the query results determiner 112 have not been received (block 802: NO), the process returns to block 802 until query instructions have been received. If the query result determiner interface 306 determines that query instructions from the query results determiner 112 have been received (block 802: YES), the memory object referencer 302 determines query results including references to the memory objects 108a-f that match the filter criteria (block 804).

At block 806, the memory object referencer 302 determines if the query results include one or more flagged references. As described above, a flagged reference corresponds to a memory object a that is currently changing data (e.g., in flux). Accordingly, a flagged reference can include an out-of-date and/or inaccurate data stored in a memory object. If the memory object referencer 302 determines that the query results do include one or more flagged references (block 806: YES), the query result determiner interface 306 transmits one or more tags corresponding to query results and a warning corresponding to the flagged references to the query results determine 112 (block 808). Accordingly, the query results determiner 112 can determine how to handle the flagged references. If the memory object referencer 302 determines that the query results do not include one or more flagged references (block 806: NO), the query result determiner interface 306 transmits a response including one or more tags corresponding to query results to the query results determine 112 (block 810). In some examples, when no references correspond to the query instructions, the query results determiner interface 306 transmits a response with no tags.

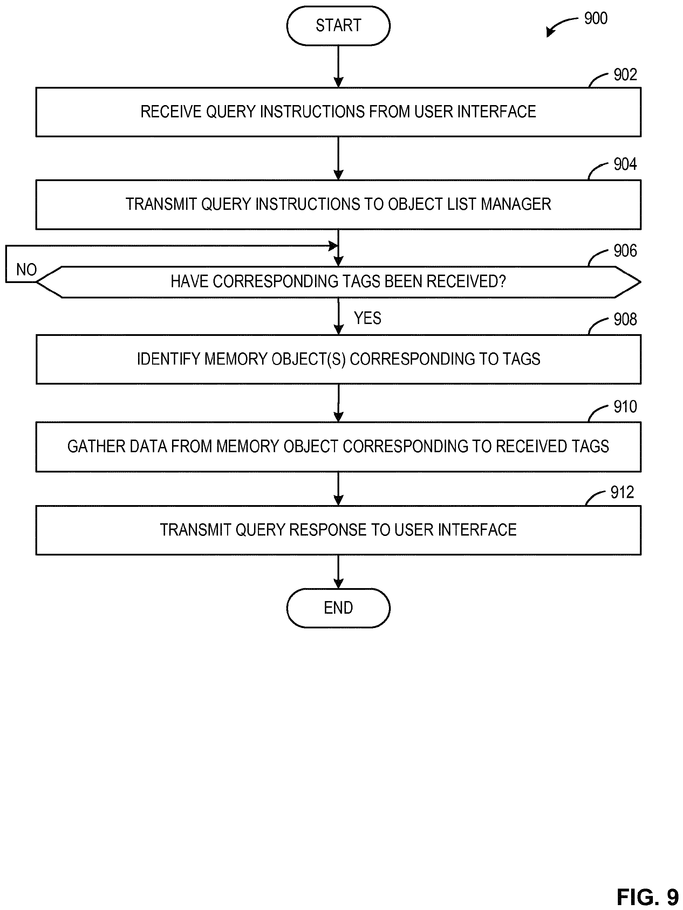

FIG. 9 is a flowchart 900 representative of example machine readable instructions that can be executed by the query result determiner 112 of FIG. 4 to identify memory objects based on a query from the user interface 114 of FIG. 1. Although the instructions of FIG. 9 are described in conjunction with the query result determiner 112 of FIG. 4, the example instructions can be utilized by any type of query result determiner.

At block 902, the query receiver 400 receives query instructions from the user interface 114. In some examples, a query instruction corresponds to a search of one or more properties (e.g., filter criteria) that may or may not be stored in the example memory objects 108a-f. At block 904, the object list manager interface 402 transmits the query instructions to the object list manager 110. At block 906, the object list manager interface 402 determines if a response including tags for memory objects corresponding to the query has been received by the object list manager 110. If the query results in no tags (e.g., no references correspond to the query instructions), the response will not include any tags. In some examples, the response includes a warning that one or more of the tags is currently being updated. In such examples, the query receiver 400 transmits the warning to the user interface 114, the object list manager interface 402 waits a duration of time and resend the query instructions to the object list manager 110, and/or the object list manager interface 402 can discard the warning. The action taken in response to a warning can be based on user and/or manufacturer preferences.

If the object list manager interface 402 determines that the response including the tags for memory objects corresponding to the query has not been received (block 906: NO), the process returns to block 906 until the response is received. If the object list manager interface 402 determines that the response including the tag(s) for memory object(s) corresponding to the query has been received (block 906: YES), the memory object interface 404 can identify memory object(s) corresponding to the tag(s) (block 908). At block 910, the memory object interface 404 can gather additional data from the one or more memory objects corresponding to the received tags. In some examples, when additional data is not desired, blocks 908, 910 can be omitted. At block 912, the query receiver 400 transmits a query response including data related to the query to the user interface 114.

FIG. 10 is a block diagram of an example processor platform 1000 structured to executing the instructions of FIG. 10 to implement the memory object controller 106, the object list manager 110, and/or the query result determiner 112 of FIGS. 1-4. Although the illustrated example of FIG. 10 includes the example processor platform 1000 to implement the memory object controller 106, the object list manager 110, and/or the query result determiner 112 of FIGS. 1-4, each of (and/or any combination of) the memory object controller 106, the object list manager 110, and/or the query result determiner 112 may be implemented by a separate processor platform. The processor platform 1000 can be, for example, a server, a personal computer, a mobile device (e.g., a cell phone, a smart phone, a tablet such as an iPad™), a personal digital assistant (PDA), an Internet appliance, or any other type of computing device.

The processor platform 1000 of the illustrated example includes a processor 1012. The processor 1012 of the illustrated example is hardware. For example, the processor 1012 can be implemented by integrated circuits, logic circuits, microprocessors or controllers from any desired family or manufacturer.

The processor 1012 of the illustrated example includes a local memory 1013 (e.g., a cache). The example processor 1012 of FIG. 10 executes the instructions of FIGS. 6-9 to implement the sensor interface 200, the memory object organizer 202, the memory object tagger 204, the memory object interface 206, the object list manager interface 208, the memory object controller interface 300, the memory object referencer 302, the memory object reference storage 304, the query result determiner interface 306, the query receiver 400, the object list manager interface 402, and/or the memory object interface 404 of FIG. 2 to implement the memory object controller 106, the object list manager 110, and/or the query result determiner 112. The processor 1012 of the illustrated example is in communication with a main memory including a volatile memory 1014 and a non-volatile memory 1016 via a bus 1018. The volatile memory 1014 may be implemented by Synchronous Dynamic Random Access Memory (SDRAM), Dynamic Random Access Memory (DRAM), RAMBUS Dynamic Random Access Memory (RDRAM) and/or any other type of random access memory device. The non-volatile memory 1016 may be implemented by flash memory and/or any other desired type of memory device. Access to the main memory 1014, 1016 is controlled by a clock controller.

The processor platform 1000 of the illustrated example also includes an interface circuit 1020. The interface circuit 1020 may be implemented by any type of interface standard, such as an Ethernet interface, a universal serial bus (USB), and/or a PCI express interface.

In the illustrated example, one or more input devices 1022 are connected to the interface circuit 1020. The input device(s) 1022 permit(s) a user to enter data and commands into the processor 1012. The input device(s) can be implemented by, for example, a sensor, a microphone, a camera (still or video), a keyboard, a button, a mouse, a touchscreen, a track-pad, a trackball, isopoint and/or a voice recognition system.

One or more output devices 1024 are also connected to the interface circuit 1020 of the illustrated example. The output devices 1024 can be implemented, for example, by display devices (e.g., a light emitting diode (LED), an organic light emitting diode (OLED), a liquid crystal display, a cathode ray tube display (CRT), a touchscreen, a tactile output device, and/or speakers). The interface circuit 1020 of the illustrated example, thus, typically includes a graphics driver card, a graphics driver chip or a graphics driver processor.

The interface circuit 1020 of the illustrated example also includes a communication device such as a transmitter, a receiver, a transceiver, a modem and/or network interface card to facilitate exchange of data with external machines (e.g., computing devices of any kind) via a network 1026 (e.g., an Ethernet connection, a digital subscriber line (DSL), a telephone line, coaxial cable, a cellular telephone system, etc.).

The processor platform 1000 of the illustrated example also includes one or more mass storage devices 1028 for storing software and/or data. Examples of such mass storage devices 1028 include floppy disk drives, hard drive disks, compact disk drives, Blu-ray disk drives, RAID systems, and digital versatile disk (DVD) drives.

The coded instructions 1032 of FIG. 10 may be stored in the mass storage device 1028, in the volatile memory 1014, in the non-volatile memory 1016, and/or on a removable tangible computer readable storage medium such as a CD or DVD.

From the foregoing, it will be appreciated that the above disclosed methods, apparatus, and articles of manufacture have been disclosed providing safe memory object access in memory management mechanisms. Examples disclosed herein include tagging active memory objects with an enumerated tag and tagging inactive memory objects with an invalid tag. Examples disclosed herein further include a storage device to store references to the active memory objects, the references including the tags and a snapshot of the memory objects. When a memory object is no longer active, examples disclosed herein change the tag to the invalid tag and remove the reference in the storage. In this matter, when a query is submitted, examples disclosed herein search the stored references to identify a match to the query. Accordingly, the query results reflect data from active memory objects. Using examples disclosed herein, a more secure memory management system is realized that does not cause errors and/or crash due to querying inactive memory objects.

Traditional memory management techniques include, in response to a query, copying the data of a memory object into a stack. However, if the size of the memory object changes, the stack may not be sufficient to store the memory object, thereby causing system errors and/or crashes. Examples disclosed herein alleviate such problems by storing references to memory objects, as opposed to all the data in the memory object. Accordingly, a query can be run without the risk of running out of memory (e.g., due to the large amount of data to be stored using traditional stacking techniques).

Although certain example methods, apparatus and articles of manufacture have been described herein, the scope of coverage of this patent is not limited thereto. On the contrary, this patent covers all methods, apparatus and articles of manufacture fairly falling within the scope of the claims of this patent.

Various aspects and embodiments of the present invention are defined by the following numbered clauses:
1. An apparatus comprising:
   a memory object container to:
      tag active memory objects with a first tag type and tag inactive memory objects with a second tag type; and
      store data into a memory object corresponding to the second tag type and tag the memory object with a tag corresponding to the first tag type;
   an object list manager to store references to active memory objects in storage, the stored references including a reference to the tagged memory object; and
   a query results determiner to, in response to receiving a query, transmit the query to the object list manager, the object list manager to identify the reference in the storage based on the query and return a query response to the query results determiner.
2. The apparatus of clause 1, wherein the memory object container is to, when the memory object is deleted, replace the tag with a second tag corresponding to the second tag type.
3. The apparatus of clause 2, wherein the object list manager is to, when the memory object container replaces the tag with the second tag, remove the reference from the storage.
4. The apparatus of clause 2 or 3, wherein the storage does not include references corresponding to the second tag type.
5. The apparatus of any of clauses 2-4, wherein memory object container replaces the tag with the second tag corresponding to the second tag type when the stored data is no longer relevant.
6. The apparatus of any of the preceding clauses, wherein the reference includes at least one of the tag or a snapshot of the memory object.
7. The apparatus of clause 6, wherein the object list manager is to identify the reference based on a match between the query and the snapshot.
8. The apparatus of clause 6 or 7, wherein the snapshot includes a characteristic corresponding to data in the memory object.
9. The apparatus of any of the preceding clauses, wherein the query results determiner is to:
   in response to receiving the query response, determine the tag of the memory object;
   identify the memory object based on the tag; and
   gather data from the memory object.
10. The apparatus of any of the preceding clauses, wherein memory object container is to transmit status data to the object list manager, the status data corresponding to a status of the memory object.
11. The apparatus of clause 10, wherein the object list manager is to update the reference based on the status data.
12. A method comprising:
   tagging active memory objects with a first tag type and tag inactive memory objects with a second tag type;
   storing data into a memory object corresponding to the second tag type and tag the memory object with a tag corresponding to the first tag type;
   storing references to active memory objects in storage, the stored references including a reference to the tagged memory object; and
   in response to receiving a query, identifying the reference in the storage based on the query and return a query response to the query results determiner.
13. The method of clause 12, further including, when the memory object is deleted, replacing the tag with a second tag corresponding to the second tag type.
14. The method of clause 13, further including replacing the tag with the second tag corresponding to the second tag type when the stored data is no longer relevant.
15. The method of any of clauses 12-14, wherein the reference includes at least one of the tag or a snapshot of the memory object.
16. The method of clause 15, wherein the identifying of the reference includes identifying the reference based on a match between the query and the snapshot.
17. The method of clauses 15 or 16, wherein the snapshot includes a characteristic corresponding to data in the memory object.
18. The method of any of clauses 12-17, further including:
   in response to receiving the query response, determining the tag of the memory object;
   identifying the memory object based on the tag; and
   gathering data from the memory object.
19. A computer readable storage medium comprising instructions which, when executed, cause a machine to at least:
   tag active memory objects with a first tag type and tag inactive memory objects with a second tag type;
   store data into a memory object corresponding to the second tag type and tag the memory object with a tag corresponding to the first tag type;
   store references to active memory objects in storage, the stored references including a reference to the tagged memory object; and
   in response to receiving a query, identify the reference in the storage based on the query and return a query response to the query results determiner.
20. The computer readable medium of clause 19, wherein the instructions cause the machine to, when the memory object is deleted, replace the tag with a second tag corresponding to the second tag type.

## Claims

1. An apparatus comprising:
a memory object container (104) to:
tag active memory objects (108a, 108b, 108c, 108d) with a first tag type and tag inactive memory objects (108e, 108f) with a second tag type; and
store data into a memory object (108e, 108f) corresponding to the second tag type and tag the memory object (108e, 108f) with a tag corresponding to the first tag type;
an object list manager (110) to store references to active memory objects (108a, 108b, 108c, 108d) in storage (304), the stored references including a reference to the tagged memory object (108e, 108f); and
a query results determiner (112) to, in response to receiving a query (508, 510), transmit the query (508, 510) to the object list manager (110), the object list manager (110) to identify the reference in the storage (304) based on the query (508, 510) and return a query response to the query results determiner (112).

2. The apparatus of claim 1, wherein the memory object container (104) is to, when the memory object (108e, 108f) is deleted, replace the tag with a second tag corresponding to the second tag type.

3. The apparatus of claim 2, wherein the object list manager (110) is to, when the memory object container (104) replaces the tag with the second tag, remove the reference from the storage (304).

4. The apparatus of claim 2 or 3, wherein the storage does not include references corresponding to the second tag type

5. The apparatus of any of claims 2-4, wherein memory object container (104) replaces the tag with the second tag corresponding to the second tag type when the stored data is no longer relevant.

6. The apparatus of any of the preceding claims, wherein the reference includes at least one of the tag or a snapshot of the memory object (108e, 108f).

7. The apparatus of claim 6, wherein the object list manager (110) is to identify the reference based on a match between the query (508, 510) and the snapshot.

8. The apparatus of claim 6 or 7, wherein the snapshot includes a characteristic corresponding to data in the memory object (108e, 108f).

9. The apparatus of any of the preceding claims, wherein the query results determiner (112) is to:
in response to receiving the query response, determine the tag of the memory object (108e, 108f);
identify the memory object (108e, 108f) based on the tag; and
gather data from the memory object (108e, 108f).

10. The apparatus of any of the preceding claims, wherein memory object container is to transmit status data to the object list manager, the status data corresponding to a status of the memory object.

11. The apparatus of claim 10, wherein the object list manager is to update the reference based on the status data.

12. A method comprising:
tagging active memory objects (108a, 108b, 108c, 108d) with a first tag type and tag inactive memory objects (108e, 108f) with a second tag type (610, 616);
storing data into a memory object (108e, 108f) corresponding to the second tag type and tag the memory object (108e, 108f) with a tag corresponding to the first tag type (608, 610);
storing references to active memory objects (108a, 108b, 108c, 108d) in storage (304), the stored references including a reference to the tagged memory object (108e, 108f) (710); and
in response to receiving a query (508, 510), identifying the reference in the storage (304) based on the query (508, 510) (804).

13. The method of claim 12, further including, when the memory object is deleted, replacing the tag with a second tag corresponding to the second tag type.

14. The method of claim 13, further including replacing the tag with the second tag corresponding to the second tag type when the stored data is no longer relevant.

15. A tangible computer-readable storage medium (1028) comprising instructions (1032) which, when executed, cause a machine (1000, 1012) to at least perform the method (600, 700, 800, 900) of claim 9.
